(19)

**Europäisches Patentamt**
**European Patent Office**
**Office européen des brevets**

(11) **EP 4 668 154 A1**

(12) **EUROPEAN PATENT APPLICATION**

(43) Date of publication:
24.12.2025 Bulletin 2025/52

(51) International Patent Classification (IPC):
**G06F 30/23** (2020.01)  **G06F 30/25** (2020.01)
**G06F 30/28** (2020.01)

(21) Application number: 25183810.8

(22) Date of filing: 18.06.2025

(52) Cooperative Patent Classification (CPC):
**G06F 30/23; G06F 30/25; G06F 30/28;**
G06F 2113/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.06.2024 US 202418749063**

(71) Applicant: **Dassault Systemes Americas Corp.
Waltham, MA 02451 (US)**

(72) Inventors:
• **OTOMO, Hiroshi**
  **Waltham, 02451 (US)**
• **SUN, Chenghai**
  **Waltham, 02451 (US)**
• **ZHANG, Raoyang**
  **Waltham, 02451 (US)**

(74) Representative: **Fish & Richardson P.C.
Highlight Business Towers
Mies-van-der-Rohe-Straße 8
80807 München (DE)**

(54) **MITIGATING DENSE BUBBLES AND RARIFIED DROPLETS IN MULTIPHASE FLUID FLOW SIMULATIONS**

(57)     Systems and methods for digitally simulating a multiphase fluid flow in a three-dimensional computer-aided design (CAD) model of a simulation space include receiving a digital representation of a simulation space, the digital representation including a three-dimensional CAD model of the simulation space including a mesh represented as a plurality of voxels; and digitally simulating a multiphase fluid flow in the digital representation of the simulation space. While simulating the multiphase fluid flow, one or more voxels in the digital representation with an incorrect phase separation are identified; and a local diffusivity parameter of the identified one or more voxels are altered to correct the incorrect phase separation.

FIG. 1

**Description**

**CROSS REFERENCE TO RELATED APPLICATIONS**

This application claims the benefit of U.S. Patent Application No. 18/749,063, filed on June 20, 2024, which is incorporated herein by reference in its entirety.

**BACKGROUND**

This description relates to simulating physical processes, e.g., multiphase fluid flow.

Multiphase or multi component flow is widespread in many engineering disciplines. Multiphase flows include the simultaneous flow of material with two or more thermodynamic phases (e.g., solid, liquid, gas). Multiphase flows can have large density differences between the two or more phases.

Multiphase flows can be simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice (or cellular) automata, in which the macroscopic-level simulation provided by solving the Navier-Stokes equations is replaced by a microscopic-level model that performs operations on particles moving between sites on a lattice. The accuracy of simulated multiphase flows depends in part on the ability of the chosen simulation model to accurately represent the disparate phases of the flow.

**SUMMARY**

Lattice Boltzmann models (LBM) can be used to simulate physical processes such as multiphase fluid flows. The separate phases in the multiphase fluid flow can be represented by an order parameter, where a specified value (e.g., 0) of the order parameter represents a first phase, and a different specified value (e.g., 1) of the order parameter represents a second phase. Unphysical phase separations (e.g., dense gas bubbles or rarified droplets) where the order parameter is close to but not equal to one of the specified values representing one of the phases can cause inaccurate simulation results. For example, the unphysical phase separations can result in poor prediction of drag and lift coefficients around a physical object. Conventional methods of correcting the unphysical phase separations include solving a different type of phase-field equation, such as the Cahn-Hilliard equation, and formulating the phase separation using the inter-component force based on the pseudo-potential model.. The conventional methods suffer from excessive numerical diffusion of small droplets and difficulties in handling the high-order derivative terms and the high density ratio between the phases of the fluid flow..

This disclosure describes an approach for simulating a multiphase fluid flow that can be used to mitigate dense bubbles and rarified droplets. A data processing system can obtain a digital representation of a simulation space with the digital representation including a plurality of voxels. The data processing system can digitally simulate a multiphase fluid flow in the digital representation of the simulation space. While simulating the multiphase fluid flow, the data processing system can identify one or more voxels in the digital representation with an incorrect phase separation. The data processing system can alter a local diffusivity parameter of the identified one or more voxels to correct the incorrect phase separation.

In an example implementation, a computer system for simulating a multiphase fluid flow in a three-dimensional computer-aided design (CAD) model of a simulation space includes one or more processors; and a memory including a mesh preparation engine for generating and storing a digital representation of a simulation space, the digital representation including a three-dimensional CAD model of the simulation space including a mesh represented as a plurality of voxels including particles; and a simulation engine for reading from the mesh preparation engine, the digital representation of the simulation space including the mesh, with the simulation engine storing instructions for simulating a multiphase fluid flow, the instructions, when executed by the one or more processors, cause the one or more processors to perform operations including reading, from the mesh preparation engine, the digital representation of the simulation space including the three-dimensional CAD model of the simulation space including the mesh represented as the plurality of voxels; digitally simulating a multiphase fluid flow in the digital representation of the simulation space; and while simulating the multiphase fluid flow: identifying one or more voxels in the digital representation with an incorrect phase separation; and altering a local diffusivity parameter of the identified one or more voxels to correct the incorrect phase separation.

In another example implementation, a method implemented by a data processing system for digitally simulating a multiphase fluid flow in a three-dimensional computer-aided design (CAD) model of a simulation space includes receiving, by a data processing system, a digital representation of a simulation space, the digital representation including a three-dimensional CAD model of the simulation space including a mesh represented as a plurality of voxels; digitally simulating, by the data processing system, a multiphase fluid flow in the digital representation of the simulation space; and while simulating the multiphase fluid flow: identifying, by the data processing system, one or more voxels in the digital representation with an incorrect phase separation; and altering, by the data processing system, a local diffusivity parameter of the identified one or more voxels to correct the incorrect phase separation.

In another example implementation, one or more non-transitory machine-readable storage devices storing instructions for digitally simulating a multiphase fluid flow in a three-dimensional computer-aided design (CAD) model of a simulation space, the instructions being executable by one or more processors, to cause performance of operations including receiving a digital representation of a simulation space, the digital representation including a three-dimensional CAD model of the simulation space including a mesh represented as a plurality of voxels; digitally simulating a multiphase fluid flow in the digital representation of the simulation space; and while simulating the multiphase fluid flow: identifying one or more voxels in the digital representation with an incorrect phase separation; and altering a local diffusivity parameter of the identified one or more voxels to correct the incorrect phase separation.

In an aspect combinable with one, some, or all of the example implementations, identifying the one or more voxels with an incorrect phase separation includes identifying one or more local extrema of an order parameter that represents a phase of a fluid of the multiphase fluid flow; and determining that a value of the one or more local extrema does not equal a specified value.

In another aspect combinable with one, some, or all of the previous aspects, the specified value corresponds to a value representing one or more phases of the multiphase fluid flow.

In another aspect combinable with one, some, or all of the previous aspects, identifying the one or more local extrema of the order parameter includes determining that a slope of the order parameter is close to 0.

In another aspect combinable with one, some, or all of the previous aspects, identifying the one or more voxels with an incorrect phase separation includes determining a concavity of an order parameter representing a phase of a fluid of the multiphase fluid flow; and identifying the one or more voxels with an incorrect phase separation based on the determined concavity.

In another aspect combinable with one, some, or all of the previous aspects, an incorrect phase separation is identified when the determined concavity is oriented toward a nearest value of the order parameter corresponding to a phase of the multiphase fluid flow.

In another aspect combinable with one, some, or all of the previous aspects, digitally simulating the multiphase fluid flow includes determining an order parameter representing a phase of the multiphase fluid flow based on an Allen-Cahn equation.

In another aspect combinable with one, some, or all of the previous aspects, the local diffusivity parameter is related to $M\left(1 - \frac{1-4(\varphi-0.5)^2}{W|\nabla\varphi|}\right)$, where $M$ is a mobility $W$ is an interface thickness, and $\varphi$ is the order parameter.

Another aspect combinable with one, some, or all of the previous aspects includes storing, in the memory, the results of a digital simulation of a multiphase fluid flow in the digital representation of the simulation space; the digital simulation being based on identifying one or more voxels in the digital representation with an incorrect phase separation; and altering a local diffusivity parameter of the identified one or more voxels to correct the incorrect phase separation.

]

One or more of the above aspects may provide one or more of the advantages disclosed herein. This approach reduces computational complexity and the computational resources needed to simulate multiphase fluid flows, including interface dynamics, as compared with phase-field models (e.g., based on the Cahn-Hilliard equation) and the pseudo-potential model. This approach uses a simple model with few parameters thereby reducing the number of computations necessary to simulate the multiphase fluid flow. This reduction in computational complexity conserves computing resources because less processing power is needed to perform the computation, relative to an amount of processing power needed for more complex computations. This reduction in computational complexity also increases the speed at which a processing device performs the computation. Generally, processing power includes an ability of a computer (or processing device) to process data. This approach improves the accuracy of multiphase fluid flow simulations by removing unphysical artifacts from the simulation while maintaining physical small droplets and bubbles. This approach is robust for simulations with high density ratio and preserves mass conservation.

Other features and advantages of the invention will be apparent from the following detailed description of the preferred embodiments, and from the claims.

**BRIEF DESCRIPTION OF THE DRAWINGS**

FIG. 1 depicts a system for simulation of fluid flows, which includes a novel surface dynamics conversion.
FIG. 2A depicts a flow chart showing operations for formulation of a Lattice Boltzmann Model simulation.

FIG. 2B depicts a flow chart showing operations for a multiphase flow simulation.

FIGS. 3A-3C depict profiles of order parameters for a rarified droplet, a dense bubble, and a regular droplet.

FIGS. 4A and 4B illustrate velocity components of two LBMs represented in Euclidean space (prior art).

FIG. 5 is a flow chart of a procedure followed by a physical process simulation system using corrected computer-aided-design (CAD) drawings.

FIG. 6 is a perspective view of a microblock (prior art).

FIGS. 7A - 7B are illustrations of lattice structures used by the system of FIG. 1 (prior art).

FIGS. 8 and 9 each illustrate variable resolution techniques (prior art).

FIG. 10 illustrates movement of particles (prior art).

FIG. 11 illustrates regions affected by a facet of a surface (prior art).

FIG. 12 illustrates movement of particles from a surface to a surface (prior art).

FIG. 13 is a flow chart of a procedure for performing surface dynamics.

FIGS. 14A-14C depict a multiphase fluid flow in a digital simulation space before and after correcting for incorrect phase separations.

FIG. 15 illustrates a multiphase fluid flow showing unphysical dense bubbles.

The details of one or more embodiments of the invention are set forth in the accompanying drawings and the description below. Other features, objects, and advantages of the invention are apparent from the description and drawings, and from the claims.

## DESCRIPTION

One method for simulating fluid flows is the so-called Lattice Boltzmann Model (LBM). In an LBM-based physical process simulation system, fluid flow is represented by distribution function values, evaluated at a set of discrete velocities using the well-known Lattice Boltzmann equation that describes the time-evolution of the distribution function. The distribution function involves two processes, a streaming process and a collision process.

LBMs can be used to simulate multiphase fluid flows. The separate phases in the multiphase fluid flow can be represented by an order parameter, where a specified value (e.g., 0) of the order parameter represents a first phase, and a different specified value (e.g., 1) of the order parameter represents a second phase. Incorrect or unphysical phase separations include regions of the fluid flow where the order parameter is close to but not equal to one of the specified values representing one of the phases. For example, a dense bubble is a region of the fluid flow that is indicated as a gas but has properties that are similar to the surrounding liquid (e.g., high density). Similarly, a rarified droplet is a region of the fluid indicated as a liquid but has properties that are similar to the surrounding gas (e.g., low density). Unphysical phase separations can cause inaccurate simulation results. For example, the unphysical phase separations can result in poor prediction of drag and lift coefficients around a physical object.

Conventional methods of correcting the incorrect unphysical phase separations include solving a different type of phase-field equation, such as the Cahn-Hilliard equation, and formulating the phase separation using an inter-component force based on a pseudo-potential flow model. The conventional methods suffer from excessive numerical diffusion of small droplets and difficulties in handling high-order derivative terms and the high density ratio between fluid phases in the simulation.

This disclosure describes an approach for simulating a multiphase fluid flow that can be used to mitigate dense bubbles and rarified droplets. A data processing system can obtain a digital representation of a simulation space with the digital representation including a plurality of voxels. The data processing system can digitally simulate a multiphase fluid flow in the digital representation of the simulation space. While simulating the multiphase fluid flow, the data processing system can identify one or more voxels in the digital representation with an incorrect phase separation. The data processing system can alter a local diffusivity parameter of the identified one or more voxels to correct the incorrect phase separation.

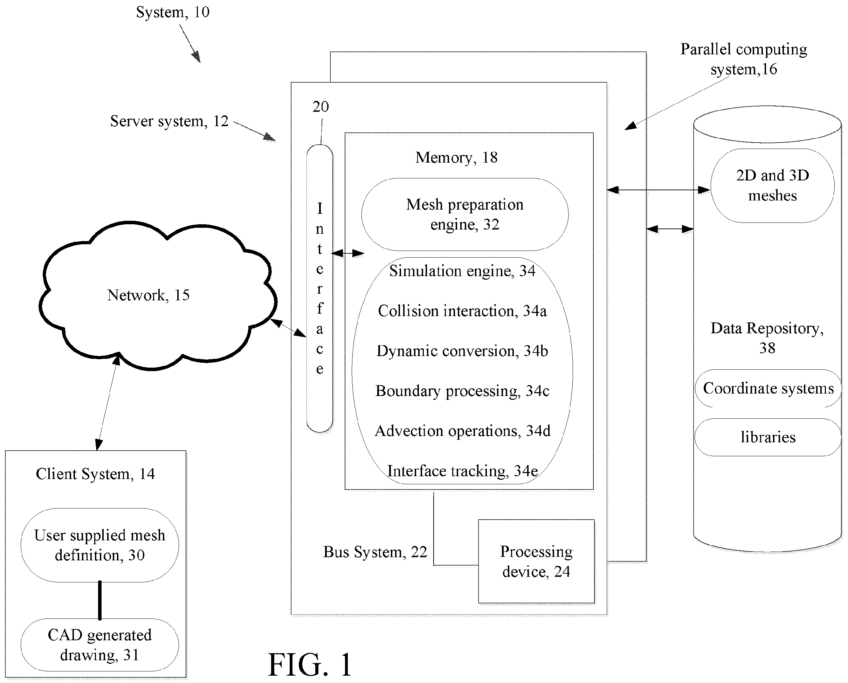

FIG. 1 illustrates a schematic of an example data processing system 10 that executes a Lattice Boltzmann (LB) based multiphase flow simulation. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34.

Simulation engine 34 includes collision interaction module 34a, which includes surface dynamics conversion 34b, boundary processing module 34c, advection operations 34d, and interface tracking module 34e. System 10 accesses data repository 38, which stores 2D and/or 3D meshes (Cartesian and/or curvilinear), coordinate systems, and libraries.

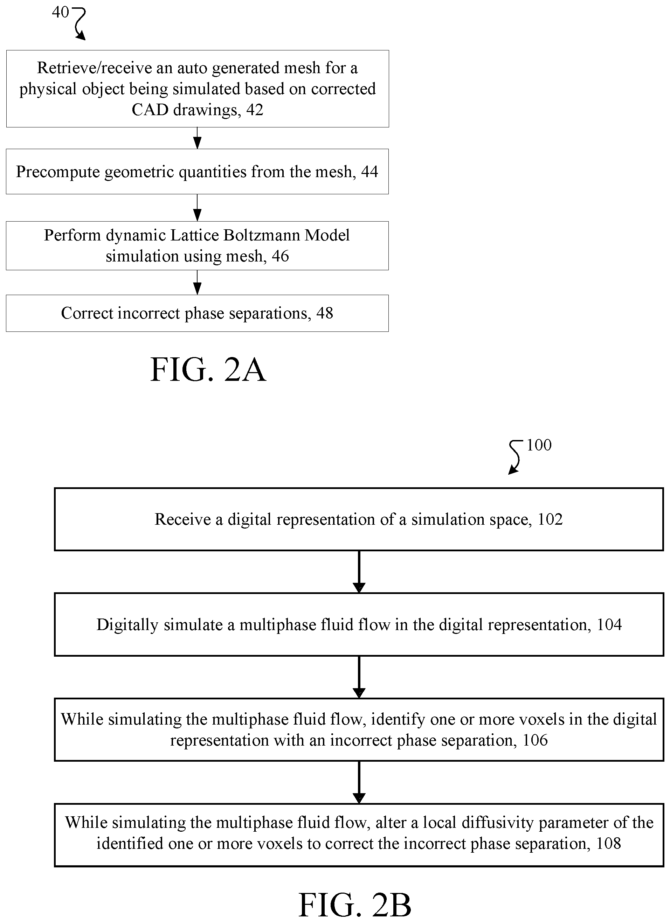

Referring to FIG. 2A, a process 40 for simulating fluid flow about a representation of a physical object is shown. In the example that will be discussed herein, the physical object is an airfoil. The use of an airfoil is merely illustrative however, the physical object can be of any shape and, in particular, can have planar and/or curved surface(s). Process 40 receives 42, e.g., from client system 14 or retrieves from data repository 38, a mesh (or grid) for the physical object being simulated. In other embodiments, either an external system or the server 12 based on user input, generates the mesh for the physical object being simulated. The process precomputes 44 geometric quantities from the retrieved mesh and performs a dynamic Lattice Boltzmann Model simulation 46 using the precomputed geometric quantities corresponding to the retrieved mesh. Lattice Boltzmann Model simulation includes the simulation 46 of the evolution of particle distributions that includes the surface dynamics conversion, boundary modeling, and advection of particles to a next cell in the LBM mesh. The process corrects 48 incorrect phase separations in the simulation.

The interface tracking module 34e determines an order parameter that represents the phase of fluid corresponding to voxels in the LBM mesh. For a two fluid system, the first phase (e.g., air) can be represented by an order parameter of 0. The second phase (e.g., water) can be represented by an order parameter of 1. The simulation engine 34 can solve two LB equations, one for hydrodynamic quantities (e.g., pressure and momentum) and one for the order parameter.

The order parameter can be determined by solving a reaction-diffusion equation, such as the Allen-Cahn equation given below:

$$\frac{\partial \varphi}{\partial t} + \nabla \cdot (\varphi u) = \nabla \cdot \left[ M \left( 1 - \frac{\theta}{|\nabla \varphi|} \right) \nabla \varphi \right]; \quad \theta = \frac{1 - 4(\varphi - 0.5)^2}{W},$$

where $\varphi$ is the order parameter, u is the fluid velocity, $M$ is a mobility, and $W$ is the interface thickness. The Allen-Cahn equation can generate unphysical dense bubbles and/or rarified droplets. Dense bubbles and rarified droplets can be identified by an order parameter value that is close to but not equal to the values representing the phases of fluid in the multiphase flow simulation. For example, a dense air bubble can be represented by voxels within a region of water where values of the order parameter are between 0.9 and 0.99 where a value of 1 represents water. A rarified droplet can be represented by voxels having an order parameter of 0.01-0.1 surrounded by voxels having an order parameter of 0 representing air.

FIG. 2B is a flowchart for a process 100 for simulating multiphase fluid flows that mitigates dense bubbles and rarified droplets. The process 100 can be implemented on a data processing system (e.g., system 10).

The data processing system receives (102) a digital representation of a simulation space, the digital representation including a plurality of voxels. In some implementations, the data processing system generates the digital representation based on CAD drawings or models. The digital representation can include voxels with resolutions to appropriately represent physical objects in the simulation space and/or flow features of the multiphase flows (e.g., bubbles, droplets, vortices).

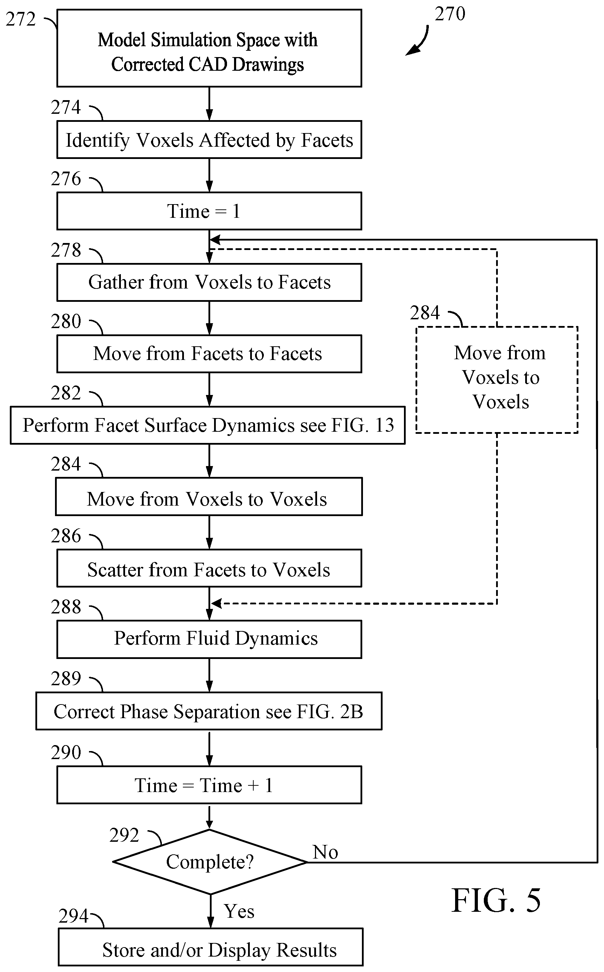

The data processing system digitally simulates (104) a multiphase fluid flow in the digital representation of the simulation space. For example, the data processing system can digitally simulate the multiphase fluid flow by implementing process 270 (FIG. 5). The data processing system can determine hydrodynamic and phase separation properties including an order parameter that represents the phase of the fluids within the digital simulation.

While simulating the multiphase fluid flow, the data processing system identifies (106) one or more voxels in the digital representation with an incorrect phase separation. In some implementations, the data processing system identifies one or more local extrema of the order parameter. For example, the data processing system can identify local extrema by determining that the slope of the order parameter is close to 0. The data processing system can determine that the value of the identified local extrema is not equal to a specified value representing a phase of the fluid. The specified value can correspond to a value that represents the phase of the fluid (e.g., 0 or 1). An incorrect phase separation can have a value that is close to 0 (e.g., 0.01-0.1) or close to 1 (e.g., 0.9-0.99).

In some implementations, the data processing system identifies the one or more voxels in the digital representation with an incorrect phase separation by determining a concavity of the order parameter. The data processing system can identify voxels with the incorrect phase separation based on the determined concavity. The data processing system can identify an incorrect phase separation when the concavity is oriented toward the nearest value of the order parameter corresponding to a phase of the multiphase fluid flow. For example, when the value of the order parameter of a voxel is close to 0 and the concavity is concave downward, the data processing system can determine that the voxel has an incorrect phase separation. Likewise, if the order parameter of a voxel is close to 1 and the concavity is concave upward, the data processing system can determine that the voxel has an incorrect phase separation.

The data processing system alters (108) a local diffusivity parameter of the identified one or more voxels to correct the incorrect phase separation. Altering the local diffusivity parameter targets only the voxels with incorrect phase separation to remove the incorrect phase separation through diffusion as the digital simulation progresses. The data processing system can revert the local diffusivity parameter to normal values after the incorrect phase separation is resolved.

In some implementations, the data processing system determines the order parameter representing the phase of the multiphase fluid flow based on an Allen-Cahn equation. In such implementations, the local diffusivity parameter is related to

$$\mathrm{M}\left(1 - \frac{1 - 4(\varphi - 0.5)^2}{W|\nabla\varphi|}\right),$$

and the data processing system can alter the local diffusivity parameter by altering the mobility, *M,* the interface thickness, *W,* or one of the constant values. This term can be considered as diffusivity or anti-diffusivity depending on its sign, so that the appropriate phase separation is realized.

The process 100 improves the accuracy of digital multiphase flow simulations by correcting the phase separation corresponding to unphysical features in the flow. The process 100 reduces the computational complexity of correcting the phase separation as compared with conventional methods discussed earlier thereby reducing computational cost and improving processing efficiency.

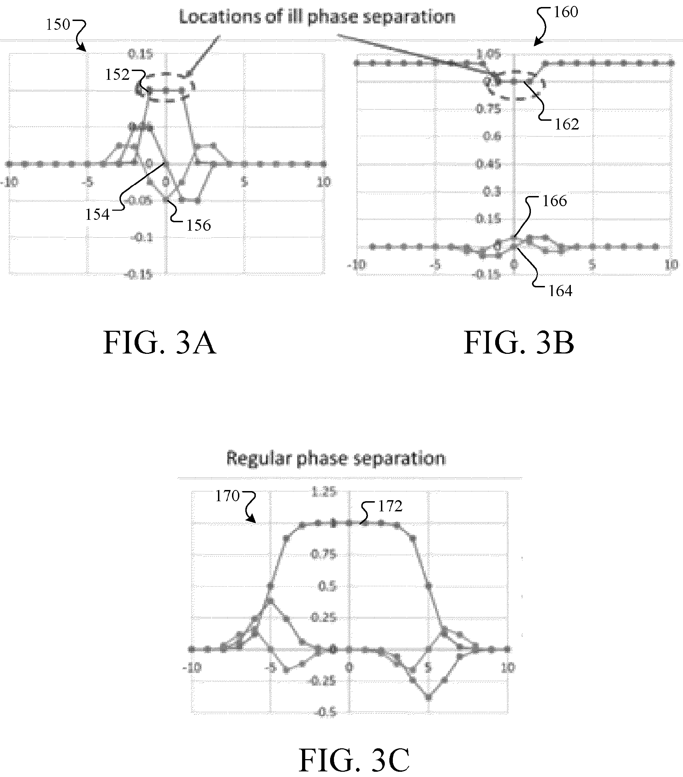

FIGS. 3A-3C show example profiles of the order parameter for a rarified droplet 150 (FIG. 3A), a dense bubble 160 (FIG. 3B), and a regular droplet 170 (FIG. 3C). Each profile shows the order parameter along with its first and second derivatives. The first and second derivatives can be used to identify local extrema and concavity of the droplet. For the rarified droplet 150, the value of the order parameter 152 is close to but not equal to zero. The slope goes to zero at the center of the rarified drop as indicated by the first derivative 154. The second derivative 156 is negative indicating a downward concavity. For the dense bubble 160, the value of the order parameter 162 is close to but not equal to 1. The first derivative 164 also goes to zero at the center of the dense bubble. The second derivative 166 is positive indicating upward concavity. For the regular drop 170, the order parameter 172 is equal to 1. Using the process 100 (FIG. 2B), a data processing system would identify the voxels associated with the rarified droplet 150 and the dense bubble 160 as having an incorrect phase separation and would alter the local diffusivity parameter for the associated voxels. The data processing system would not identify the regular droplet 170 as having an incorrect phase separation.

Detailed Example

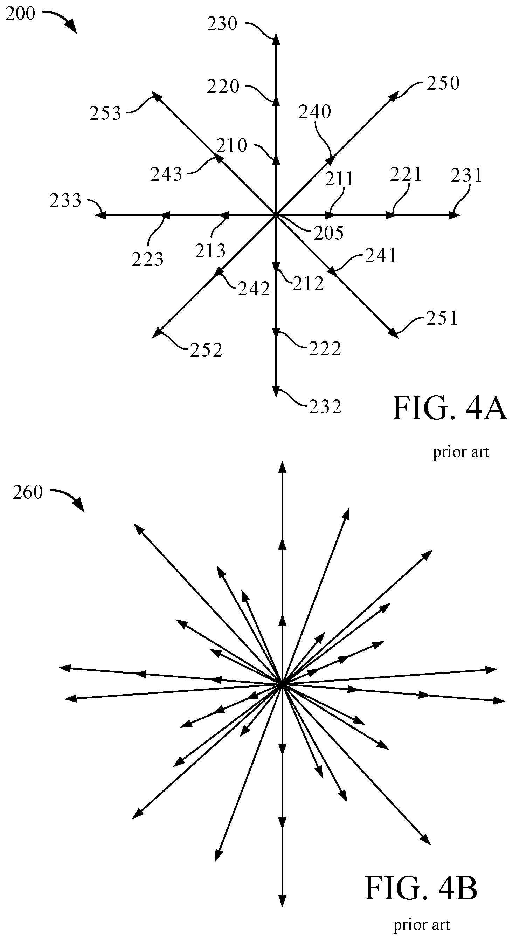

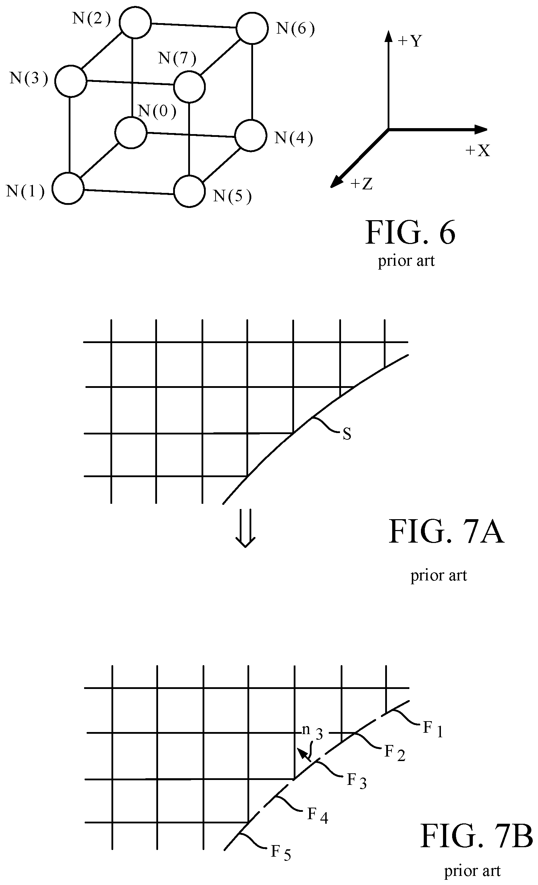

In the procedure discussed in FIG. 5 below, a flow simulation process is described using CAD drawings with the identified void space to configure a simulation space. In FIGS. 3 and 4 that precede and FIGS. 6, 7A, 7B, 8, 9, 10, 11 and 12, each of these figures are labeled as prior art because these figures appear in U.S. Patent 5,848,260 (the '260 patent) or U.S. Patent 11,847,391 (the '391 patent), both of which are hereby incorporated in their entirety.

However, the figures as they appear in the above patent do not take into consideration any modifications that would be made to a flow simulation to mitigate unphysical dense bubbles and/or rarified droplets.

**Model Simulation Space**

In an LBM-based physical process simulation system, fluid flow is represented by the distribution function values evaluated at a set of discrete velocities. The dynamics of the distribution function is governed by the Lattice Boltzmann equation which relates the change of the distribution due to the so-called "streaming process" to changes in the distribution function due to the "collision process" The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross and Krook (BGK) operator. The collision operator forces the distribution function to go to prescribed values.

The BGK operator is constructed according to the physical argument that, no matter what the details of the collisions, the distribution function approaches a well-defined local equilibrium via collisions according to a characteristic relaxation time to reach equilibrium via collisions. Dealing with particles (e.g., atoms or molecules), the relaxation time is typically taken as a constant.

From this simulation, conventional fluid variables, such as mass and fluid velocity, are obtained based on simple summations of products of the distribution. Due to symmetry considerations, the set of velocity values are selected in such a way that they form certain lattice structures when spanned in the configuration space. The dynamics of such discrete systems obey the LBE where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The collective values of the lattice velocities and the associated weights define an LBM. The LBM can be implemented, efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken. In a fluid system, a small disturbance of the density travels at the speed of sound. In a gas system, the speed of sound is generally determined by the temperature. The importance of the effect of compressibility in a flow is measured by the ratio of the characteristic velocity and the sound speed, which is known as the Mach number.

A general discussion of an LBM-based simulation system is provided below that includes the dynamic conversion 34b to conduct fluid flow simulations. For a further explanation of LBM-based physical process simulation systems, the reader is referred to U.S. Patent 5,848,260 (referred to later as the '260 patent), which is hereby incorporated in its entirety.

Referring to FIG. 4A, a first model (2D-1) 200 is a two-dimensional model that includes 21 velocities. Of these 21 velocities, one (205) represents particles that are not moving; three sets of four velocities represent particles that are moving at either a normalized speed (r) (210-213), twice the normalized speed (2r) (220-223), or three times the normalized speed (3r) (230-233) in either the positive or negative direction along either the *x* or *y* axis of the lattice; and two sets of four velocities represent particles that are moving at the normalized speed (r) (240-243) or twice the normalized speed *(2r)* (250-253) relative to both of the *x* and *y* lattice axes.

Referring to FIG. 4B, illustrated is a second model (3D-1) 260 - a three-dimensional model that includes 39 velocities where each velocity is represented by one of the arrowheads of FIG. 4. Of these 39 velocities, one represents particles that are not moving; three sets of six velocities represent particles that are moving at either a normalized speed (r), twice the normalized speed (2r), or three times the normalized speed (3r) in either the positive or negative direction along the *x, y* or *z* axis of the lattice; eight represent particles that are moving at the normalized speed *(r)* relative to all three of the *x, y, z* lattice axes; and twelve represent particles that are moving at twice the normalized speed *(2r)* relative to two of the *x, y, z* lattice axes.

More complex models, such as a 3D-2 model, which includes 101 velocities, and a 2D-2 model, which includes 37 velocities, may also be used. For the three-dimensional model 3D-2, of the 101 velocities, one represents particles that are not moving (Group 1); three sets of six velocities represent particles that are moving at either a normalized speed (*r*), twice the normalized speed (2*r*), or three times the normalized speed (3*r*) in either the positive or negative direction along the *x, y* or *z* axis of the lattice (Groups 2, 4, and 7); three sets of eight represent particles that are moving at the normalized speed *(r)*, twice the normalized speed *(2r),* or three times the normalized speed (3*r*) relative to all three of the *x, y, z* lattice axes (Groups 3, 8, and 10); twelve represent particles that are moving at twice the normalized speed (2*r*) relative to two of the *x, y, z* lattice axes (Group 6); twenty four represent particles that are moving at the normalized speed *(r)* and twice the normalized speed *(2r)* relative to two of the *x, y, z* lattice axes, and not moving relative to the remaining axis (Group 5); and twenty four represent particles that are moving at the normalized speed *(r)* relative to two of the *x, y, z* lattice axes and three times the normalized speed (3*r*) relative to the remaining axis (Group 9).

For the two-dimensional model 2D-2, of the 37 velocities, one represents particles that are not moving (Group 1); three sets of four velocities represent particles that are moving at either a normalized speed *(r),* twice the normalized speed *(2r),* or three times the normalized speed (3*r*) in either the positive or negative direction along either the *x* or *y* axis of the lattice (Groups 2, 4, and 7); two sets of four velocities represent particles that are moving at the normalized speed *(r)* or twice the normalized speed *(2r)* relative to both of the *x* and *y* lattice axes; eight velocities represent particles that are moving at the normalized speed (*r*) relative to one of the *x* and *y* lattice axes and twice the normalized speed *(2r)* relative to the other axis; and eight velocities represent particles that are moving at the normalized speed (*r*) relative to one of the *x* and *y* lattice axes and three times the normalized speed (3*r*) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 5, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow. The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles per unit volume in a given state at a lattice site denoted by a spatial vector at a given time.

The number of states is determined by the number of possible velocity vectors within each energy level. The velocity vectors are integer linear speeds in a space having three dimensions: $x$, $y$, and $z$. The number of states is increased for multiple-species simulations.

Each state represents a different velocity vector at a specific energy level (i.e., energy level zero, one or two). The velocity of each state is indicated with its "speed" in each of the three dimensions. The energy level zero state represents stopped particles that are not moving in any dimension, i.e., the speed of the particles in each dimension is zero. Energy level one states represents particles having a $\pm 1$ speed in one of the three dimensions and a zero speed in the other two dimensions. Energy level two states represent particles having either a $\pm 1$ speed in all three dimensions, or a $\pm 2$ speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states).

Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 6. The voxels are represented at the corners of the microblock.

Referring to FIGS. 7A and 7B, a surface S (FIG. 7A) is represented in the simulation space (FIG. 7B) as a collection of facets $F_\alpha$, where $\alpha$ is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet $F_\alpha$ has a unit normal ($n_\alpha$), a surface area ($A_\alpha$), a center location ($x_\alpha$), and a facet distribution function ($f_i(\alpha)$) that describes the surface dynamic properties of the facet. The total energy distribution function is treated in the same way as the flow distribution for facet and voxel interaction.

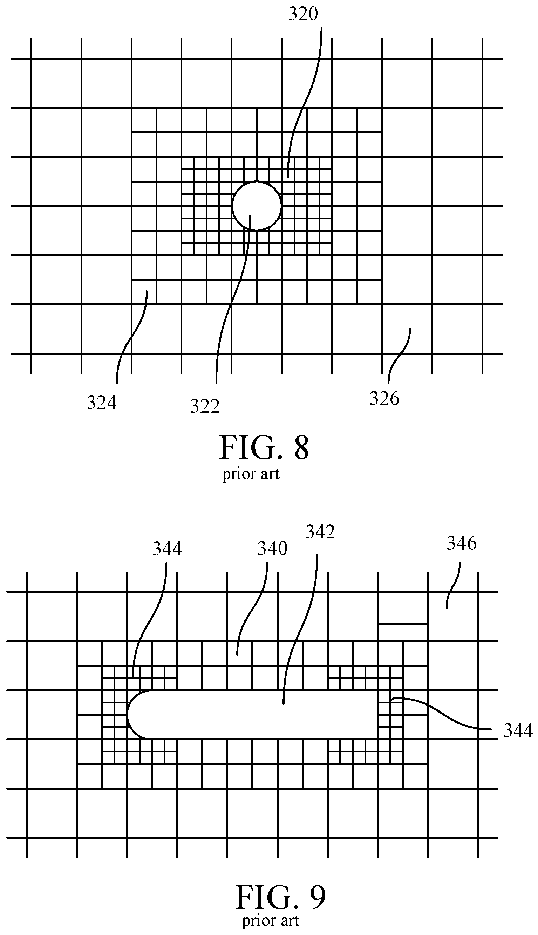

Referring to FIG. 8, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 9, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

### C. Identify Voxels Affected By Facets

Referring again to FIG. 5, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor indicates the portion of the voxel that is unaffected by the facet (i.e., the portion that can be occupied by a fluid or other materials for which flow is being simulated). For non-intersected voxels the fractional factor equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

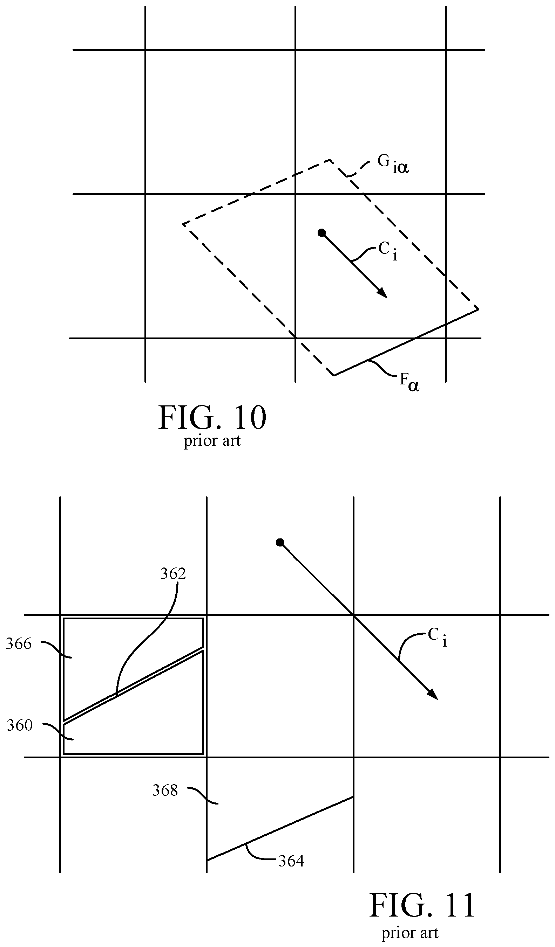

Referring to FIG. 10, for each state $i$ having a non-zero velocity vector $c_i$, a facet $F_\alpha$ receives particles from, or transfers particles to, a region defined by a parallelepiped $G_{i\alpha}$ having a height defined by the magnitude of the vector dot product of the velocity vector $c_i$ and the unit normal $n_\alpha$ of the facet and a base defined by the surface area $A_\alpha$ of the facet so that the volume $V_{i\alpha}$ of the parallelepiped $G_{i\alpha}$ equals the base times the height.

The facet $F_\alpha$ receives particles from the volume $V_{i\alpha}$ when the velocity vector of the state is directed toward the facet, and transfers particles to the region when the velocity vector of the state is directed away from the facet. As will be discussed below, this relationship is modified when another facet occupies a portion of the parallelepiped $C_{i\alpha}$, a condition that could occur in the vicinity of non-convex features of a surface such as interior corners.

The parallelepiped $G_{i\alpha}$ of a facet $F_\alpha$ may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet $F_\alpha$ equals the density of the particles of the state in the voxel multiplied by the volume of the region of overlap with the voxel.

When the parallelepiped $G_{i\alpha}$ is intersected by one or more facets, the volume of the parallelepiped $V_{i\alpha}$ is equal to the summation of the volumes associated with each of the voxels overlapped by $G_{i\alpha}$ and the summation of the volumes associated with all of the facets that intersect $G_{i\alpha}$.

## D. Perform Simulation

Once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

### 1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal $n_\alpha$ of the facet (i.e., the tangential components) are equal, while the difference between the components of the combined, received, and transferred momentums that are parallel to the normal $n_\alpha$ of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

### 2. Gather From Voxels to Facets

Simulating interaction between particles and a surface, particles are gathered from the voxels and provided to the facets (278). As noted above, the flux of particles between a voxel and a facet for a given state is related to the overlap of the parallelepiped of the facet and the voxel for the given state. Only voxels for which parallelepiped has a non-zero value are summed. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

### 3. Move From Facet to Facet

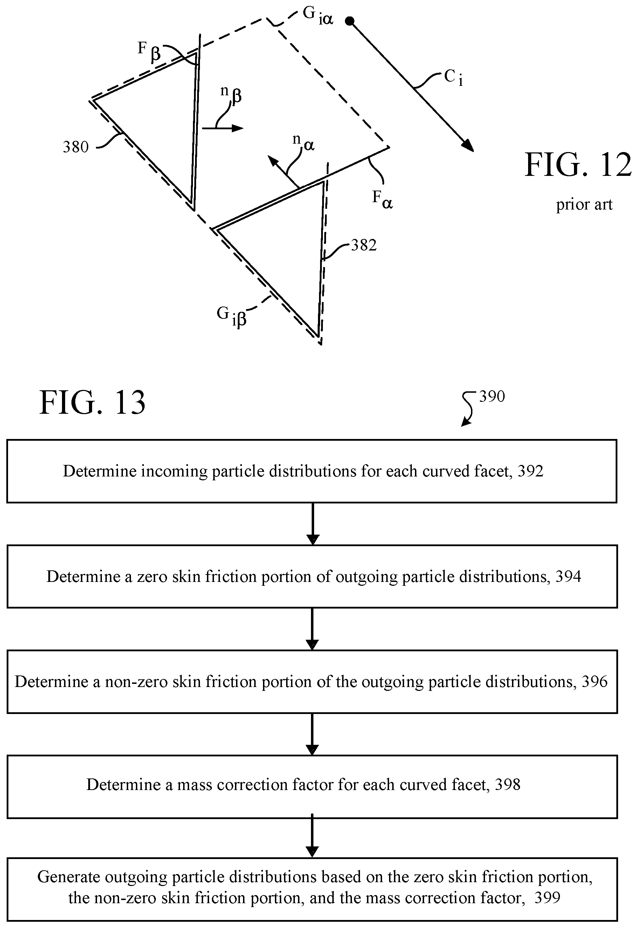

Next, particles are moved between facets (280). If the parallelepiped $G_{i\alpha}$ for an incoming state of a facet $F_\alpha$ is intersected by another facet $F_\beta$, then a portion of the particles for the incoming state received by the facet $F_\alpha$ will come from

the facet $F_\beta$. In particular, facet $F_\alpha$ will receive a portion of the particles for the given state produced by facet $F_\beta$ during the previous time increment. This relationship is illustrated in FIG. 12, where a portion 380 of the parallelepiped $G_{i\alpha}$ that is intersected by facet $F_\beta$ equals a portion 382 of the parallelepiped $G_{i\beta}$ that is intersected by facet $F_\alpha$. or each state directed toward a facet $F_\alpha$, the number of particles provided to the facet $F_\alpha$ by the other facets is equal to the flux of particles from the other facets from the previous time step multiplied by the ratio of the overlapping volume between parallelepipeds of the other facets and the facet $F_\alpha$ for a given state and the total volume of the parallelepiped for the facet $F_\alpha$. for that state.

The total flux of particles for the given state into the facet $F_\alpha$ is equal to the sum of the particles from all of the voxels overlapping the parallelepipeds of the facet and the sum of the fluxes from all of the facets that have parallelepiped volumes overlapping with the parallelepiped volumes of the facet $F_\alpha$:

The state vector for the facet, also referred to as a facet distribution function, has a number of entries corresponding to the number entries of the voxel states vectors, where the number of entries is the number of discrete lattice speeds in the LBM. The input states of the facet distribution function are set equal to the flux of particles into those states divided by the volume $V_{i\alpha}$.

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

4. Perform Facet Surface Dynamics

Next, surface dynamics are performed (282) for each facet to satisfy the boundary conditions. A procedure 390 for performing surface dynamics for a facet is illustrated in FIG. 13.

The velocity and densities are sampled from the voxel to the facet $F_\alpha$, during the gather step 278 (FIG. 5). The velocity is then projected along the surface. The Boltzmann Equilibrium distribution is computed (392) based on the sampled density and projected velocity, and the density and velocity are scaled to satisfy the constraints. The resulting density and velocity are then used to compute the new Boltzmann Equilibrium distribution (392). The difference between the incoming distribution and the new Boltzmann distribution determined (394), and the combined momentum difference between all incoming states and the facet's corresponding Boltzmann distribution (396) are computed. The momentum difference is projected along the tangential direction of the facet (398).

From the above momentum difference and the Boltzmann distribution, the outgoing flux for the facet is computed to satisfy the perfect slip boundary condition (399), by satisfying zero tangential flux. To account for skin friction and other factors, the outgoing flux distribution can be augmented with a skin friction component based on a product of the skin friction coefficient of the surface and a difference of the equilibrium portions of the outgoing and incoming particle fluxes. A more detailed description of applying skin friction and correction to different energy levels of lattice required for perfect mass and energy conservations are presented in the '260 patent and the '391 patent.

5. Move From Voxels to Voxels

Referring again to FIG. 5, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: $x$, $y$, and $z$. The integer speeds include: 0, $\pm1$, and $\pm2$. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the +1x direction (1, 0, 0) is moved from its current voxel to one that is +1 over in the $x$ direction and 0 for other direction. The particle ends up at its destination voxel with the same state it had before the move (1,0,0). Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet results in fractional particles remaining in the voxels. These fractional particles are transferred to a voxel occupied by the facet.

Referring to FIG. 11, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets).

6. Scatter From Facets to Voxels

Next, the outgoing particles from each facet are scattered to the voxels (286, FIG. 5). Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (exceed 255 in an eight-bit implementation). This would result in either a gain or loss in mass, momentum and energy after these quantities are truncated to fit in the allowed range of values. To protect against such occurrences, the mass, momentum and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

7. Perform Fluid Dynamics

Fluid dynamics are performed (288, FIG. 5). This may be referred to as microdynamics or intravoxel operations. Similarly, the advection procedure may be referred to as intervoxel operations. The microdynamics operations described below may also be used to collide particles at a facet to produce a Boltzmann distribution.

The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

8. Correct Phase Separation

The phase separation is corrected (289, FIG. 5) according to the process 100 (FIG. 2B). The local diffusivity parameters of locations identified as having incorrect phase separations are adjusted, and in subsequent time steps, the incorrect phase separation is corrected through diffusion mechanisms of the multiphase fluid flow simulation.

**Variable Resolution**

Variable resolution (as discussed in U.S. Patent 10,360,324, which is hereby incorporated in its entirety) can also be employed and would use voxels of different sizes, e.g., coarse voxels and fine voxels, for different regions of the mesh according to regions of interest. For example, regions of interest can include fine voxels to resolve fluid dynamics at smaller scales and with higher resolution. Outside regions of interest, coarse voxels can be used in the mesh to reduce the number of computations without reducing the accuracy of the fluid flow simulation in the regions of interest. During a simulation of a physical process, particles may be advected between the regions having different resolutions.

Referring to FIGS. 2B, 5 and 13, the results of the processes 100, 270 and 390 can be used in manufacturing a physical structure, e.g., using one or more computer-controlled manufacturing systems. For example, the simulation can be used to optimize a shape of a physical object for improved fluid flow around or through the object. The optimized shape can be used as path planning data for computer-aided manufacturing processes to produce the optimized shape. Examples of shapes that can be optimized include airfoil or hydrofoil shapes for aerodynamic or hydrodynamic bodies, flow paths for internal pipe or channel flows (e.g., for a liquid cooling system), nozzles and diffusers for wind tunnels, gears in a gear box, a mixer in a mixing tank, etc.

Alternatively, or additionally, the results of the fluid flow simulation of process 270 can be used to predict performance of an aerodynamic body (e.g., predicting generated lift or drag on an airfoil), predicting pressure head loss of a fluid flowing through a pipe or channel, and/or predicting the propagation of acoustic waves (e.g., predicting flow induced noise sources and acoustic wave propagation from an exterior of a vehicle such as a car or airplane to the interior of the vehicle). The results of the fluid flow simulation of process 270 can also be used to predict fluid flow around complex geometry such as fluid flow around gears in a gear box or flow around a mixer in a mixing tank. The techniques described herein improve the accuracy of such fluid flow simulations in predicting performance of an aerodynamic body, predicting pressure head loss of a fluid flowing through a pipe or channel, and/or predicting phase separations in fluid flows around gears in a gearbox or fluid flows around a mixer in a mixing tank.

**Examples**

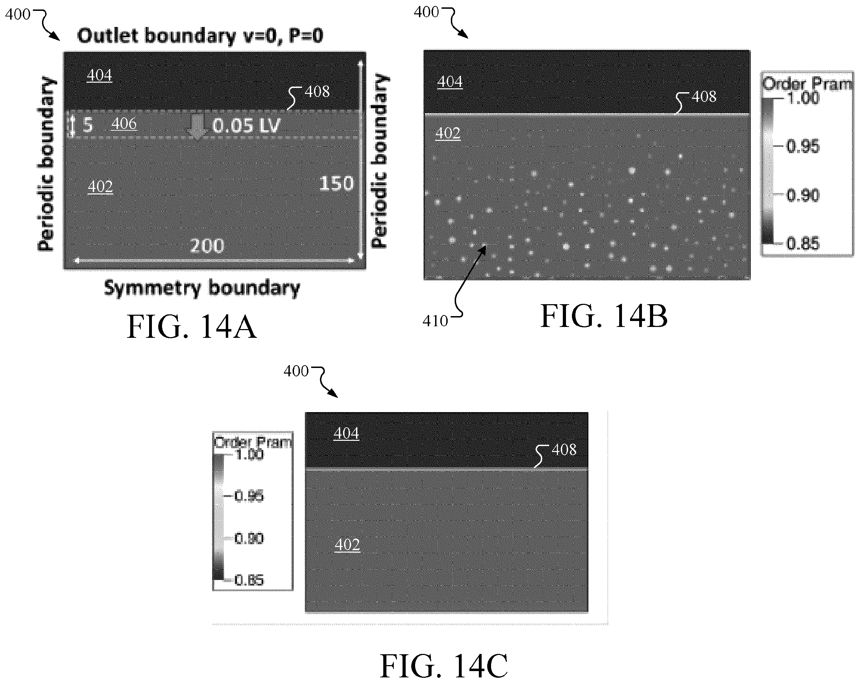

FIG. 14A illustrates a simulation space 400 for an example multiphase flow simulation. This example includes a water phase 402 and an air phase 404. A portion 406 of the water phase 402 near the air-water interface 408 has an initial downward velocity (toward the water phase) at the start of the multiphase flow simulation.

FIG. 14B shows the phase separation in the simulation space 400 after reaching a steady state condition. There are a multitude of dense bubbles 410 in the water phase 402 resulting from the initial velocity shock from the portion 406 of the water phase moving downward. The dense bubbles 410 have values of the order parameter between 0.9 and 1 indicating that these are unphysical separations (e.g., bubbles that are related to numerical artifacts).

FIG. 14C shows the steady-state phase separation in the simulation space 400 after implementing the process 100 during the multiphase flow simulation. The dense bubbles 410 seen in FIG. 14B have been eliminated.

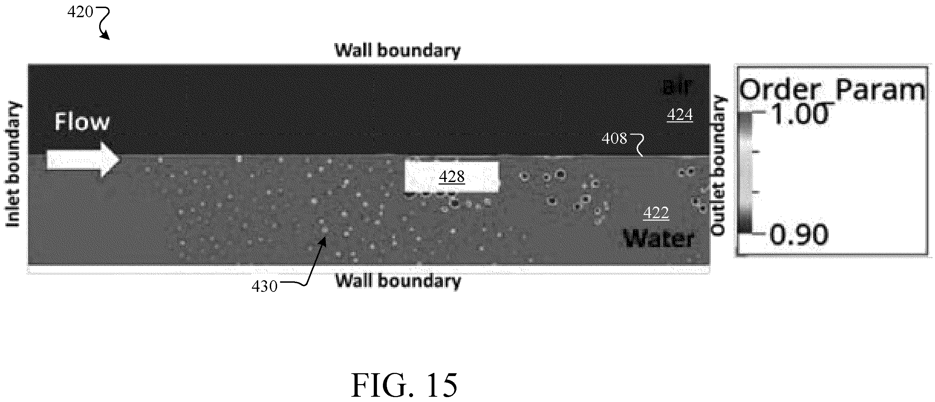

FIG. 15 shows an example snapshot of a multiphase flow simulation in a simulation space 420. The multiphase flow simulation includes water 422 flowing with air 424 above the free surface 426. The simulation space 420 includes a rectangular object 428 through which the water 422 flows from left to right. The multiphase flow simulation generates a multitude of dense bubbles 430 indicated by order parameter values between 0.90 and 1.00. The dense bubbles 430 artificially disturb the water flow and result in poor predictions of drag and lift coefficients around the rectangular object. The dense bubbles 430 can be mitigated by implementing the process 100 (FIG. 2B) during the multiphase flow simulation.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

**EMBODIMENTS**

Although the present invention is defined in the claims, it should be understood that the present invention can also (alternatively) be defined in accordance with the following embodiments:

1. A computer system for simulating a multiphase fluid flow in a three-dimensional computer-aided design (CAD) model of a simulation space, the computer system comprising:

one or more processors; and
a memory including:

a mesh preparation engine for generating and storing a digital representation of a simulation space, the digital representation including a three-dimensional CAD model of the simulation space including a mesh represented as a plurality of voxels including particles; and
a simulation engine for reading from the mesh preparation engine, the digital representation of the simulation space including the mesh,
with the simulation engine storing instructions for simulating a multiphase fluid flow, the instructions, when executed by the one or more processors, cause the one or more processors to perform operations comprising:

reading, from the mesh preparation engine, the digital representation of the simulation space including the three-dimensional CAD model of the simulation space including the mesh represented as the plurality of voxels;
digitally simulating a multiphase fluid flow in the digital representation of the simulation space; and
while simulating the multiphase fluid flow:

identifying one or more voxels in the digital representation with an incorrect phase separation; and
altering a local diffusivity parameter of the identified one or more voxels to correct the incorrect phase separation.

2. The computer system of embodiment 1, wherein identifying the one or more voxels with an incorrect phase separation comprises:

identifying one or more local extrema of an order parameter that represents a phase of a fluid of the multiphase fluid flow; and
determining that a value of the one or more local extrema does not equal a specified value.

3. The computer system of embodiment 2, wherein the specified value corresponds to a value representing one or more phases of the multiphase fluid flow.

4. The computer system of embodiment 2, wherein identifying the one or more local extrema of the order parameter comprises determining that a slope of the order parameter is close to 0.

5. The computer system of embodiment 1, wherein identifying the one or more voxels with an incorrect phase separation comprises:

determining a concavity of an order parameter representing a phase of a fluid of the multiphase fluid flow; and
identifying the one or more voxels with an incorrect phase separation based on the determined concavity.

6. The computer system of embodiment 5, wherein an incorrect phase separation is identified when the determined concavity is oriented toward a nearest value of the order parameter corresponding to a phase of the multiphase fluid flow.

7. The computer system of embodiment 1, wherein digitally simulating the multiphase fluid flow comprises determining an order parameter representing a phase of the multiphase fluid flow based on an Allen-Cahn equation.

8. The computer system of embodiment 7, wherein the local diffusivity parameter is related to

$$M\left(1 - \frac{1 - 4(\varphi - 0.5)^2}{W|\nabla\varphi|}\right)$$

, where $M$ is a mobility $W$ is an interface thickness, and $\varphi$ is the order parameter.

9. The computer system of embodiment 1, wherein the instructions further comprise:
storing, in the memory, the results of a digital simulation of a multiphase fluid flow in the digital representation of the simulation space; the digital simulation being based on identifying one or more voxels in the digital representation with an incorrect phase separation; and altering a local diffusivity parameter of the identified one or more voxels to correct the incorrect phase separation.

10. A method implemented by a data processing system for digitally simulating a multiphase fluid flow in a three-dimensional computer-aided design (CAD) model of a simulation space, the method comprising:

receiving, by a data processing system, a digital representation of a simulation space, the digital representation including a three-dimensional CAD model of the simulation space including a mesh represented as a plurality of voxels;
digitally simulating, by the data processing system, a multiphase fluid flow in the digital representation of the simulation space; and
while simulating the multiphase fluid flow:

identifying, by the data processing system, one or more voxels in the digital representation with an incorrect phase separation; and
altering, by the data processing system, a local diffusivity parameter of the identified one or more voxels to correct the incorrect phase separation.

11. The method of embodiment 10, wherein identifying the one or more voxels with an incorrect phase separation comprises:

identifying one or more local extrema of an order parameter that represents a phase of a fluid of the multiphase fluid flow; and

determining that a value of the one or more local extrema does not equal a specified value.

12. The method of embodiment 11, wherein the specified value corresponds to a value representing one or more phases of the multiphase fluid flow.

13. The method of embodiment 11, wherein identifying the one or more local extrema of the order parameter comprises determining that a slope of the order parameter is close to 0.

14. The method of embodiment 10, wherein identifying the one or more voxels with an incorrect phase separation comprises:

determining a concavity of an order parameter representing a phase of a fluid of the multiphase fluid flow; and identifying the one or more voxels with an incorrect phase separation based on the determined concavity.

15. The method of embodiment 14, wherein an incorrect phase separation is identified when the determined concavity is oriented toward a nearest value of the order parameter corresponding to a phase of the multiphase fluid flow.

16. The method of embodiment 10, wherein digitally simulating the multiphase fluid flow comprises determining an order parameter representing a phase of the multiphase fluid flow based on an Allen-Cahn equation, wherein the local diffusivity parameter is related to $M\left(1 - \frac{1-4(\varphi-0.5)^2}{W|\nabla\varphi|}\right)$, where $M$ is a mobility, $W$ is an interface thickness, and $\varphi$ is the order parameter.

17. One or more non-transitory machine-readable storage devices storing instructions for digitally simulating a multiphase fluid flow in a three-dimensional computer-aided design (CAD) model of a simulation space, the instructions being executable by one or more processors, to cause performance of operations comprising:

receiving a digital representation of a simulation space, the digital representation including a three-dimensional CAD model of the simulation space including a mesh represented as a plurality of voxels; digitally simulating a multiphase fluid flow in the digital representation of the simulation space; and while simulating the multiphase fluid flow:

identifying one or more voxels in the digital representation with an incorrect phase separation; and altering a local diffusivity parameter of the identified one or more voxels to correct the incorrect phase separation.

18. The one or more non-transitory machine-readable storage devices of embodiment 17, wherein identifying the one or more voxels with an incorrect phase separation comprises:

identifying one or more local extrema of an order parameter that represents a phase of a fluid of the multiphase fluid flow; and determining that a value of the one or more local extrema does not equal a specified value.

19. The one or more non-transitory machine-readable storage devices of embodiment 18, wherein the specified value corresponds to a value representing one or more phases of the multiphase fluid flow, and wherein identifying the one or more local extrema of the order parameter comprises determining that a slope of the order parameter is close to 0.

20. The one or more non-transitory machine-readable storage devices of embodiment 17, wherein identifying the one or more voxels with an incorrect phase separation comprises:

determining a concavity of an order parameter representing a phase of a fluid of the multiphase fluid flow; and identifying the one or more voxels with an incorrect phase separation when the determined concavity is oriented toward a nearest value of the order parameter corresponding to a phase of the multiphase fluid flow.

**Claims**

1. A computer system for simulating a multiphase fluid flow in a three-dimensional computer-aided design (CAD) model of a simulation space, the computer system comprising:

   one or more processors; and
   a memory including:

      a mesh preparation engine for generating and storing a digital representation of a simulation space, the digital representation including a three-dimensional CAD model of the simulation space including a mesh represented as a plurality of voxels including particles; and
      a simulation engine for reading from the mesh preparation engine, the digital representation of the simulation space including the mesh,
      with the simulation engine storing instructions for simulating a multiphase fluid flow, the instructions, when executed by the one or more processors, cause the one or more processors to perform operations comprising:

         reading, from the mesh preparation engine, the digital representation of the simulation space including the three-dimensional CAD model of the simulation space including the mesh represented as the plurality of voxels;
         digitally simulating a multiphase fluid flow in the digital representation of the simulation space; and
         while simulating the multiphase fluid flow:

            identifying one or more voxels in the digital representation with an incorrect phase separation; and
            altering a local diffusivity parameter of the identified one or more voxels to correct the incorrect phase separation.

2. The computer system of claim 1, wherein identifying the one or more voxels with an incorrect phase separation comprises:

   identifying one or more local extrema of an order parameter that represents a phase of a fluid of the multiphase fluid flow; and
   determining that a value of the one or more local extrema does not equal a specified value.

3. The computer system of claim 2, wherein the specified value corresponds to a value representing one or more phases of the multiphase fluid flow.

4. The computer system of claim 2, wherein identifying the one or more local extrema of the order parameter comprises determining that a slope of the order parameter is close to 0.

5. The computer system of claim 1, wherein identifying the one or more voxels with an incorrect phase separation comprises:

   determining a concavity of an order parameter representing a phase of a fluid of the multiphase fluid flow; and
   identifying the one or more voxels with an incorrect phase separation based on the determined concavity.

6. The computer system of claim 5, wherein an incorrect phase separation is identified when the determined concavity is oriented toward a nearest value of the order parameter corresponding to a phase of the multiphase fluid flow.

7. The computer system of claim 1, wherein digitally simulating the multiphase fluid flow comprises determining an order parameter representing a phase of the multiphase fluid flow based on an Allen-Cahn equation.

8. The computer system of claim 7, wherein the local diffusivity parameter is related to $M\left(1 - \frac{1 - 4(\varphi - 0.5)^2}{W|\nabla\varphi|}\right)$, where $M$ is a mobility $W$ is an interface thickness, and $\varphi$ is the order parameter.

9. The computer system of claim 1, wherein the instructions further comprise:

storing, in the memory, the results of a digital simulation of a multiphase fluid flow in the digital representation of the simulation space; the digital simulation being based on identifying one or more voxels in the digital representation with an incorrect phase separation; and altering a local diffusivity parameter of the identified one or more voxels to correct the incorrect phase separation.

10. A method implemented by a data processing system for digitally simulating a multiphase fluid flow in a three-dimensional computer-aided design (CAD) model of a simulation space, the method comprising:

receiving, by a data processing system, a digital representation of a simulation space, the digital representation including a three-dimensional CAD model of the simulation space including a mesh represented as a plurality of voxels;

digitally simulating, by the data processing system, a multiphase fluid flow in the digital representation of the simulation space; and

while simulating the multiphase fluid flow:

identifying, by the data processing system, one or more voxels in the digital representation with an incorrect phase separation; and

altering, by the data processing system, a local diffusivity parameter of the identified one or more voxels to correct the incorrect phase separation.

11. The method of claim 10, wherein identifying the one or more voxels with an incorrect phase separation comprises:

identifying one or more local extrema of an order parameter that represents a phase of a fluid of the multiphase fluid flow; and

determining that a value of the one or more local extrema does not equal a specified value.

12. The method of claim 11, wherein the specified value corresponds to a value representing one or more phases of the multiphase fluid flow, and/or wherein identifying the one or more local extrema of the order parameter comprises determining that a slope of the order parameter is close to 0.

13. The method of claim 10, wherein identifying the one or more voxels with an incorrect phase separation comprises:

determining a concavity of an order parameter representing a phase of a fluid of the multiphase fluid flow; and identifying the one or more voxels with an incorrect phase separation based on the determined concavity, optionally wherein an incorrect phase separation is identified when the determined concavity is oriented toward a nearest value of the order parameter corresponding to a phase of the multiphase fluid flow.

14. The method of claim 10, wherein digitally simulating the multiphase fluid flow comprises determining an order parameter representing a phase of the multiphase fluid flow based on an Allen-Cahn equation, wherein the local diffusivity parameter is related to $M\left(1 - \frac{1-4(\varphi-0.5)^2}{W|\nabla\varphi|}\right)$, where $M$ is a mobility, $W$ is an interface thickness, and $\varphi$ is the order parameter.

15. One or more non-transitory machine-readable storage devices storing instructions for digitally simulating a multiphase fluid flow in a three-dimensional computer-aided design (CAD) model of a simulation space, the instructions being executable by one or more processors, to cause performance of operations comprising the method of any one of claims 10 to 14.

System, 10

Parallel computing system, 16

Server system, 12

20

Memory, 18

Mesh preparation engine, 32

Simulation engine, 34

Collision interaction, 34a

Dynamic conversion, 34b

Boundary processing, 34c

Advection operations, 34d

Interface tracking, 34e

Interface

Network, 15

2D and 3D meshes

Data Repository, 38

Coordinate systems

libraries

Client System, 14

User supplied mesh definition, 30

CAD generated drawing, 31

Bus System, 22

Processing device, 24

FIG. 1

EP 4 668 154 A1

40

```
Retrieve/receive an auto generated mesh for a
physical object being simulated based on corrected
CAD drawings, 42
```

↓

```
Precompute geometric quantities from the mesh, 44
```

↓

```
Perform dynamic Lattice Boltzmann Model
simulation using mesh, 46
```

↓

```
Correct incorrect phase separations, 48
```

## FIG. 2A

100

```
Receive a digital representation of a simulation space, 102
```

↓

```
Digitally simulate a multiphase fluid flow in the digital representation, 104
```

↓

```
While simulating the multiphase fluid flow, identify one or more voxels in the digital
representation with an incorrect phase separation, 106
```

↓

```
While simulating the multiphase fluid flow, alter a local diffusivity parameter of the
identified one or more voxels to correct the incorrect phase separation, 108
```

## FIG. 2B

FIG. 3A

FIG. 3B

FIG. 3C

FIG. 4A

prior art

FIG. 4B

prior art

272 — Model Simulation Space with Corrected CAD Drawings

270

274 — Identify Voxels Affected by Facets

276 — Time = 1

278 — Gather from Voxels to Facets

280 — Move from Facets to Facets

282 — Perform Facet Surface Dynamics see FIG. 13

284 — Move from Voxels to Voxels

284 — Move from Voxels to Voxels

286 — Scatter from Facets to Voxels

288 — Perform Fluid Dynamics

289 — Correct Phase Separation see FIG. 2B

290 — Time = Time + 1

292 — Complete? — No

Yes

294 — Store and/or Display Results

FIG. 5

N(2) N(6)

N(7)

N(3) N(0)

N(4)

N(1) N(5)

+Y

+X

+Z

## FIG. 6
### prior art

S

FIG. 7A

prior art

$n_3$

$F_1$

$F_2$

$F_3$

$F_4$

$F_5$

## FIG. 7B
### prior art

320

324    322              326

FIG. 8

prior art

344        340    342           346

344

FIG. 9

prior art

FIG. 10
prior art

FIG. 11
prior art

**FIG. 12**

prior art

# FIG. 13

$\zeta^{390}$

Determine incoming particle distributions for each curved facet, 392

Determine a zero skin friction portion of outgoing particle distributions, 394

Determine a non-zero skin friction portion of the outgoing particle distributions, 396

Determine a mass correction factor for each curved facet, 398

Generate outgoing particle distributions based on the zero skin friction portion, the non-zero skin friction portion, and the mass correction factor, 399

FIG. 14A

FIG. 14B

FIG. 14C

EP 4 668 154 A1

FIG. 15

EP 4 668 154 A1

| | Europäisches Patentamt<br>European Patent Office<br>Office européen des brevets | **EUROPEAN SEARCH REPORT** | Application Number<br>**EP 25 18 3810** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HIROSHI OTOMO ET AL: "Improved phase-field-based lattice Boltzmann models with a filtered collision operator", ARXIV.ORG, CORNELL UNIVERSITY LIBRARY, 201 OLIN LIBRARY CORNELL UNIVERSITY ITHACA, NY 14853, [Online]<br>1 December 2018 (2018-12-01), XP081199832, [retrieved on 2019-05-10]<br>* abstract *<br>* sections 2-4;<br>page 2 - page 7 *<br>* page 9 - page 10; figures 2, 3, 5, 6, 7 * | 1-15 | INV.<br>G06F30/23<br>G06F30/25<br>G06F30/28 |
| A | US 2022/188485 A1 (GOPALAKRISHNAN PRADEEP [US] ET AL) 16 June 2022 (2022-06-16)<br>* paragraph [0048] - paragraph [0050]; figure 1 * | 1-9 | |
| A | SHARMA DEEWAKAR ET AL: "Adaptive interface thickness based mobility-Phase-field method for incompressible fluids", INTERNATIONAL JOURNAL OF MULTIPHASE FLOW, ELSEVIER, AMSTERDAM, NL, [Online]<br>vol. 142, 19 May 2021 (2021-05-19), XP086716778,<br>ISSN: 0301-9322, DOI: 10.1016/J.IJMULTIPHASEFLOW.2021.103687<br>[retrieved on 2021-05-19]<br>* sections 2, 3;<br>page 3 - page 5 *<br>* section 7.4;<br>page 15 - page 16; figure 23 * | 1-15 | TECHNICAL FIELDS SEARCHED (IPC)<br><br>G06F |

-/--

The present search report has been drawn up for all claims

| Place of search | Date of completion of the search | Examiner |
|---|---|---|
| Munich | 9 September 2025 | Lindner, Anja |

page 1 of 2

## EUROPEAN SEARCH REPORT

**Application Number**

EP 25 18 3810

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN Z ET AL: "Multiphase lattice Boltzmann flux solver with conservative Allen-Cahn model for modeling high-density-ratio flows", INTERNATIONAL JOURNAL FOR NUMERICAL METHODS IN FLUIDS, WILEY - INTERSCIENCE PUBLICATION, CHICHESTER, GB, vol. 96, no. 5, 30 January 2024 (2024-01-30), pages 701-718, XP072615504, ISSN: 0271-2091, DOI: 10.1002/FLD.5265 * abstract * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 9 September 2025 | Lindner, Anja |

EPO FORM 1503 03.82 (P04C01)

## ANNEX TO THE EUROPEAN SEARCH REPORT
## ON EUROPEAN PATENT APPLICATION NO.

EP 25 18 3810

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2025

| Patent document cited in search report | Publication date | Patent family member(s) | | Publication date |
|---|---|---|---|---|
| US 2022188485 A1 | 16-06-2022 | EP | 3680801 A1 | 15-07-2020 |
| | | US | 2020250362 A1 | 06-08-2020 |
| | | US | 2022188485 A1 | 16-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 74906324
- US 5848260 A
- US 11847391 B
- US 10360324 B